# EUROPEAN PATENT APPLICATION

(11) **EP 4 258 708 A1**
(43) Date of publication of application: **11.10.2023**
(21) Application number: 20967640.2
(22) Date of filing: 30.12.2020
(51) Int. Cl.: H04W 4/40

(54) **COMMUNICATION METHODS AND APPARATUS AND SYSTEM**

(71) Applicant: Huawei Technologies Co., Ltd., Shenzhen, Guangdong 518129 (CN)
(72) Inventor: WU, Yedan, Shenzhen, Guangdong 518129 (CN); GENG, Tingting, Shenzhen, Guangdong 518129 (CN); OLOFSSON, Henrik, Shenzhen, Guangdong 518129 (CN)
(74) Representative: Pfenning, Meinig & Partner mbB
(86) International application number: PCT/CN2020/141820
(87) International publication number: WO 2022/141301

(57) **Abstract**

This application discloses a communication method, apparatus, and system, so that a load balancing function between network elements is improved and enhanced, and an exchange process is simple, direct, and effective. In the method, a first network device sends a first message to a second network device to request to obtain a resource status report of the second network device, and the first network device receives a second message that responds to the first message from the second network device. The first message includes measured object information, and the first message further includes at least one of measurement period information, event information triggering the resource status report, and overload threshold information. The event information triggering the resource status report includes at least one of used resource threshold information, available resource threshold information, threshold information of resource occupation changing within preset time, and resource level baseline information.

## Description

### TECHNICAL FIELD

This application relates to the field of mobile communication technologies, and in particular, to a communication method, apparatus, and system.

### BACKGROUND

In a communication system, network devices (for example, base stations) may exchange information to obtain status information of each other. For example, a base station may exchange information with a neighboring cell base station to obtain resource usage of a neighboring cell, to optimize a network mobility parameter configuration. Therefore, performance such as mobility load balancing (mobility load balancing, MLB) is implemented. However, content of load information exchanged between existing network devices or an exchange process still needs to be improved urgently.

### SUMMARY

Embodiments of this application provide a communication method, apparatus, and system, so that a load balancing function between network elements can be improved and enhanced, and an exchange process is simple, direct, and effective.

According to a first aspect, a communication method is provided. It may be understood that the method in the first aspect may be performed by a first apparatus, and the first apparatus may be a first network device or a communication apparatus that can support the first network device to implement a function required by the method, for example, a chip, a circuit, or a chip system.

For example, the communication method may include:
The first network device sends a first message to a second network device to request to obtain a resource status report of the second network device, and the first network device receives a second message that responds to the first message from the second network device. The first message includes measured object information, and the first message further includes at least one of measurement period information, event information triggering the resource status report, and overload threshold information. The event information triggering the resource status report includes at least one of used resource threshold information, available resource threshold information, threshold information of resource occupation changing within preset time, and resource level baseline information. A resource level baseline is a baseline for starting resource leveling, the measurement period information indicates a period in which the second network device measures resource usage, and the overload threshold information indicates a threshold for determining whether the second network device is overloaded. In some possible implementations of the first aspect, when the second network device may obtain the resource status report based on the first message, the communication method may further include: The first network device receives the resource status report from the second network device.

In some possible implementations of the first aspect, the resource status report received by the first network device may include information indicating that the second network device is overloaded. Optionally, the first network device may further receive the overload threshold information from the second network device.

Optionally, to enable the first network device to control measurement behavior of the second network device more flexibly, the first network device may further indicate the second network device to stop periodic measurement, for example, indicate the second network device to stop periodic measurement by indicating that a measurement period is 0. Optionally, the first network device may also indicate, by using a dedicated message, to stop periodic measurement.

According to a second aspect, a communication method is provided. The method in the second aspect may be performed by a second apparatus, and the second apparatus may be a second network device or a communication apparatus that can support the second network device to implement a function required by the method, for example, a chip, a circuit, or a chip system.

The communication method may include: The second network device receives a first message from a first network device, and the second network device sends a second message that responds to the first message to the first network device. The first message is used to request to obtain a resource status report of the second network device, the first message includes measured object information, and the first message further includes at least one of measurement period information, event information triggering the resource status report, and overload threshold information. The event information triggering the resource status report includes at least one of used resource threshold information, available resource threshold information, threshold information of resource occupation changing within preset time, and resource level baseline information. A resource level baseline is a baseline for starting resource leveling, the measurement period information indicates a period in which the second network device measures resource usage, and the overload threshold information indicates a threshold for determining whether the second network device is overloaded.

In some possible implementations of the second aspect, when the second network device determines, based on the first message, that measurement corresponding to the first message cannot be completed, the second network device indicates, to the first network device by using the second message, that a resource status fails to be obtained.

In some possible implementations of the second aspect, when the second network device determines, based on the first message, that measurement corresponding to the first message can be completed, the second network device indicates, to the first network device by using the second message, that measurement on a measured object can be initiated. Further, the second network device performs measurement based on the first message, obtains the resource status report, and sends the resource status report to the first network device.

In some possible implementations of the second aspect, the second network device may indicate, by using the resource status report, information indicating that the second network device is overloaded. Optionally, the second network device may further send the overload threshold information to the first network device. An overload threshold may be configured by the first network device, may be preset, or may be determined by the second network device.

Optionally, to enable the first network device to control measurement behavior of the second network device more flexibly, information indicating to stop periodic measurement may further be received from the first network device, for example, information indicating that a measurement period is 0.

According to the communication method in the first aspect or the second aspect, network devices may learn load of each other more accurately, so that a mobility parameter may be further adjusted. In this way, a load balancing function between network elements can be improved and enhanced, and an exchange process is simple, direct, and effective. In particular, this is more effective for a load exchange process between systems. Further, mobility information exchanged between the network devices may be richer. Further, the second network device reports, based on the event information that is configured by the first network device and that is of triggering the resource status report, the resource status report when an event is met, so that reporting of the resource status report of the second network device can be more reasonable, and effectiveness of reporting is improved.

In some possible implementations of the first aspect or the second aspect, the first network device and the second network device may be of a same standard (RAT) or different standards, or the first network device and the second network device may belong to a same system or different systems.

In some possible implementations of the first aspect or the second aspect, the measurement period information includes at least one measurement period. Optionally, the at least one measurement period may correspond to the resource usage. By configuring the measurement period, effectiveness of performing load (resource usage) measurement by the second network device can be improved. In addition, the measurement period corresponds to the resource usage, so that application of the measurement period can be more flexible and reasonable. Optionally, time validity of the measurement period may be controlled by using valid time or a quantity of valid times.

It may be understood that the resource level baseline in the first aspect or the second aspect may be a preset value, or may be a value determined by the second network device (for example, may be determined based on a network status or a load status); and may not be sent by the first network device to the second network device.

Optionally, in some possible implementations of the first aspect or the second aspect, the first message may further include reporting period information.

Optionally, in some possible implementations of the first aspect or the second aspect, the first message may further include the measured object information.

Optionally, in some possible implementations of the first aspect or the second aspect, the first message may further include a measurement identifier.

Optionally, in some possible implementations of the first aspect or the second aspect, the measurement period information, the event information triggering the resource status report, the overload threshold information, the reporting period information, and the measured object information may be at a base station (node) granularity, a cell granularity, a beam granularity, a slice granularity, or a BWP granularity. In this way, load measurement is more accurate.

According to a third aspect, a communication method is provided. It may be understood that the method in the third aspect may be performed by a third apparatus, and the third apparatus may be a first network device or a communication apparatus that can support the first network device to implement a function required by the method, for example, a chip, a circuit, or a chip system. For example, the method may include:

The first network device sends a third message to a second network device, to request to change a mobility parameter, and the first network device receives a fourth message that responds to the third message from the second network device. The third message includes an identifier of a first cell of the first network device, an identifier of a second cell of the second network device, and event information of mobility parameter change, and the mobility parameter includes a mobility parameter of the first network device and/or a mobility parameter of the second network device.

According to a fourth aspect, a communication method is provided. It may be understood that the method in the fourth aspect may be performed by a fourth apparatus, and the fourth apparatus may be a second network device or a communication apparatus that can support the second network device to implement a function required by the method, for example, a chip, a circuit, or a chip system. For example, the method may include:

The second network device receives a third message from a first network device, and the second network device sends a fourth message that responds to the third message to the first network device. The third message is used to request to change a mobility parameter, the third message includes an identifier of a first cell of the first network device, an identifier of a second cell of the second network device, and event information of mobility parameter change, and the mobility parameter includes a mobility parameter of the first network device and/or a mobility parameter of the second network device.

According to the method in the third aspect or the fourth aspect, an event-based mobility parameter change is introduced, and the mobility parameter change is associated with resource usage and mobility parameters of the first network device and/or the second network device, so that a mobility parameter change between network devices is more intelligent. Further, compared with a one-time adjustment solution for the mobility parameter, signaling can also be reduced by using the solution in this embodiment of this application.

In some possible implementations of the third aspect or the fourth aspect, if the second network device does not accept (rejects) the mobility parameter change request of the first network device, the fourth message indicates that the second network device rejects to change the mobility parameter. Further, the fourth message may further include event information that the second network device can accept to change the mobility parameter, so that negotiation between the first network device and the second network device can be better completed, and efficiency is improved.

In some possible implementations of the third aspect or the fourth aspect, if the second network device accepts the mobility parameter change request of the first network device, the fourth message indicates event information that the second network device accepts to change the mobility parameter.

In some possible implementations of the third aspect or the fourth aspect, the event information of mobility parameter change is associated with the resource usage of the first network device and/or the second network device.

In some possible implementations of the third aspect or the fourth aspect, the mobility parameter includes a handover threshold.

In some possible implementations of the third aspect or the fourth aspect, the mobility parameter change requested by the first network device may have different granularities, for example, include at least one of the following granularities: a cell granularity, a beam granularity, a slice granularity, or a bandwidth part (bandwidth part, BWP) granularity. In this way, the mobility parameter can be changed more flexibly and finely. The communication method in the first aspect and the communication method in the third aspect may also be combined, or the communication method in the second aspect and the communication method in the fourth aspect may also be combined.

According to a fifth aspect, a communication apparatus is provided, and the communication apparatus has a function of implementing behavior in the method in the first aspect. The function may be implemented by hardware, or may be implemented by hardware executing corresponding software. The hardware or software includes one or more modules corresponding to the foregoing functions. In a possible design, the communication apparatus includes a receiving unit and a sending unit. Optionally, a processing unit and/or a storage unit may be further included. The receiving unit and the sending unit may be implemented by using a transceiver, the processing unit may be implemented by using at least one processor, and the storage unit may be implemented by using at least one memory.

According to a sixth aspect, a communication apparatus is provided, and the communication apparatus has a function of implementing behavior in the method in the second aspect. The function may be implemented by hardware, or may be implemented by hardware executing corresponding software. The hardware or software includes one or more modules corresponding to the foregoing functions. In a possible design, the communication apparatus includes a receiving unit and a sending unit. Optionally, a processing unit and/or a storage unit may be further included. The receiving unit and the sending unit may be implemented by using a transceiver, the processing unit may be implemented by using at least one processor, and the storage unit may be implemented by using at least one memory.

According to a seventh aspect, a communication apparatus is provided, and the communication apparatus has a function of implementing behavior in the method in the third aspect. The function may be implemented by hardware, or may be implemented by hardware executing corresponding software. The hardware or software includes one or more modules corresponding to the foregoing functions. In a possible design, the communication apparatus includes a receiving unit and a sending unit. Optionally, a processing unit and/or a storage unit may be further included. The receiving unit and the sending unit may be implemented by using a transceiver, the processing unit may be implemented by using at least one processor, and the storage unit may be implemented by using at least one memory.

According to an eighth aspect, a communication apparatus is provided, and the communication apparatus has a function of implementing behavior in the method in the fourth aspect. The function may be implemented by hardware, or may be implemented by hardware executing corresponding software. The hardware or software includes one or more modules corresponding to the foregoing functions. In a possible design, the communication apparatus includes a receiving unit and a sending unit. Optionally, a processing unit and/or a storage unit may be further included. The receiving unit and the sending unit may be implemented by using a transceiver, the processing unit may be implemented by using at least one processor, and the storage unit may be implemented by using at least one memory.

According to a ninth aspect, a communication apparatus is provided, and the communication apparatus may be a communication apparatus for implementing any communication method in the first aspect to the fourth aspect. The communication apparatus includes a processor and a memory. The memory is configured to store a computer program, instructions, or data. The processor is coupled to the memory and a communication interface. When the processor reads the computer program, the instructions, or the data, the communication apparatus is enabled to perform the method in any aspect.

It should be understood that the communication interface may be a transceiver in the communication apparatus, and is implemented, for example, by using an antenna, a feeder, a codec, and the like in the communication apparatus. Alternatively, if the communication apparatus is a chip disposed in an access network device, the communication interface may be an input/output interface of the chip, for example, an input/output pin and the like. The transceiver is used by the communication apparatus to communicate with another device.

According to a tenth aspect, an embodiment of this application provides a chip system, and the chip system includes a processor, configured to implement any method in the first aspect to the fourth aspect. In a possible design, the chip system further includes a memory, configured to store program instructions and/or data. The chip system may include a chip, or may include a chip and another discrete component.

According to an eleventh aspect, an embodiment of this application provides a communication system, and the system includes the first network device and the second network device.

According to a twelfth aspect, a computer program product is provided, and the computer program product includes computer program code. When the computer program code is run, any method in the foregoing aspects is performed.

According to a thirteenth aspect, this application provides a computer-readable storage medium, and the computer-readable storage medium stores a computer program. When the computer program is run, any method in the foregoing aspects is implemented.

### BRIEF DESCRIPTION OF DRAWINGS

FIG. 1 is a schematic diagram of an architecture of a communication system to which an embodiment of this application is applied;
FIG. 2 is a flowchart of an example of a communication method according to an embodiment of this application;
FIG. 3 is a flowchart of an example of a communication method according to an embodiment of this application;
FIG. 4 is a flowchart of an example of a communication method according to an embodiment of this application;
FIG. 5 is a flowchart of another example of a communication method according to an embodiment of this application;
FIG. 6 is a schematic diagram of a structure of a communication apparatus according to an embodiment of this application; and
FIG. 7 is a schematic diagram of a structure of a communication apparatus according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

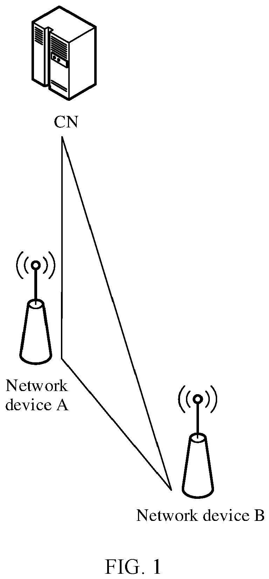

The technical solutions in embodiments of this application described below may be applied to a network architecture shown in FIG. 1. FIG. 1 is merely an example of a communication system. The communication system may include at least two network devices. In FIG. 1, two network devices are used as an example. A network device A and a network device B in FIG. 1 may directly or indirectly (for example, by using a core network CN device in the figure) exchange information. It may be understood that a quantity of network devices in FIG. 1 is merely an example. There may be more network devices in the communication system, and any network device may provide a service for a terminal device within a coverage area.

A terminal device is a device having a wireless transceiver function, and may be a fixed device, a mobile device, a handheld device, a wearable device, a vehicle-mounted device, or an apparatus (for example, a communication module or a chip system) built in the foregoing device. The terminal device is configured to connect a person, an object, a machine, and the like, and may be widely used in various scenarios. The terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer with a wireless transceiver function, a virtual reality (virtual reality, VR) terminal device, an augmented reality (augmented reality, AR) terminal device, a wireless terminal in industrial control (industrial control), a wireless terminal in an Internet of things (Internet of things, IoT) system, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a vehicle-mounted communication apparatus, a vehicle-mounted communication processing chip, a wearable device, a terminal device in a 5G network, a terminal device in a future evolved public land mobile network (public land mobile network, PLMN), or the like.

It should be understood that a specific form of the terminal device is not limited in this application.

The network device may be an access network device. The access network device may also be referred to as a radio access network (radio access network, RAN) device, and is a device that communicates with a wireless terminal through an air interface in an access network by using one or more sectors, or may be considered as a device that provides a wireless communication function for a terminal device. The access network device includes, for example, but is not limited to, a next generation NodeB (generation NodeB, gNB), an evolved NodeB (evolved NodeB, eNB), a baseband unit (baseband unit, BBU), a transmitting and receiving point (transmitting and receiving point, TRP), a transmitting point (transmitting point, TP) in 5G, a base station in a future mobile communication system, or an access point in a Wi-Fi system. Alternatively, the access network device may be a radio controller, a central unit (central unit, CU), and/or a distributed unit (distributed unit, DU) in a cloud radio access network (cloud radio access network, CRAN) scenario, or the network device may be a relay station, a vehicle-mounted device, a network device in a future evolved PLMN network, or the like.

The CU and the DU may be physically separated or deployed together. A plurality of DUs may share one CU. One DU may be connected to a plurality of CUs. The CU and the DU may be connected through an interface, for example, an F1 interface. The CU and the DU may be obtained through division based on protocol layers of a wireless network. For example, a possible division manner is that the CU is configured to perform functions of a radio resource control (Radio Resource Control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like. It may be understood that, division into processing functions of the CU and the DU based on the protocol layers is merely an example, and there may be another division manner. For example, the CU or the DU may have functions of more protocol layers through division. For example, the CU or the DU may alternatively have some processing functions of the protocol layers through division. In a design, some functions of the RLC layer and functions of a protocol layer above the RLC layer are distributed in the CU, and remaining functions of the RLC layer and functions of a protocol layer below the RLC layer are distributed in the DU. In another design, functions of the CU or the DU may alternatively be obtained through division based on a service type or another system requirement. For example, division is performed based on a delay, a function whose processing time needs to satisfy a delay requirement is disposed on the DU, and a function whose processing time does not need to satisfy the delay requirement is disposed on the CU. The network architecture shown in the figure may be applied to a 5G communication system, and may alternatively share one or more components or resources with an LTE system. In another design, the CU may alternatively have one or more functions of the core network. One or more CUs may be set in a centralized manner or a split manner. For example, the CUs may be disposed on a network side for ease of centralized management. The DU may have a plurality of radio frequency functions, or the radio frequency functions may be set remotely.

Functions of the CU may be implemented by one entity, or may be implemented by different entities. For example, the functions of the CU may be further divided. For example, a control plane (control panel, CP) and a user plane (user panel, UP), namely, a control plane of the CU (CU-CP) and a user plane of the CU (CU-UP), are separated. For example, the CU-CP and the CU-UP may be implemented by different function entities. The CU-CP and the CU-UP may be coupled to the DU to jointly implement functions of the access network device. An interface between the CU-CP and the CU-UP may be an E1 interface.

The terminal device may communicate with access network devices by using different technologies. For example, the terminal device may communicate with an access network device supporting long term evolution (long term evolution, LTE), may communicate with an access network device supporting 5G, or may communicate with both an access network device supporting LTE and an access network device supporting 5G. This is not limited in embodiments of this application.

With reference to the accompanying drawings, the following describes apparatuses configured to implement the foregoing methods in embodiments of this application. Therefore, all the foregoing content may be used in the following embodiments. Repeated content is not described again. To implement functions in the foregoing methods provided in embodiments of this application, network elements or apparatuses may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

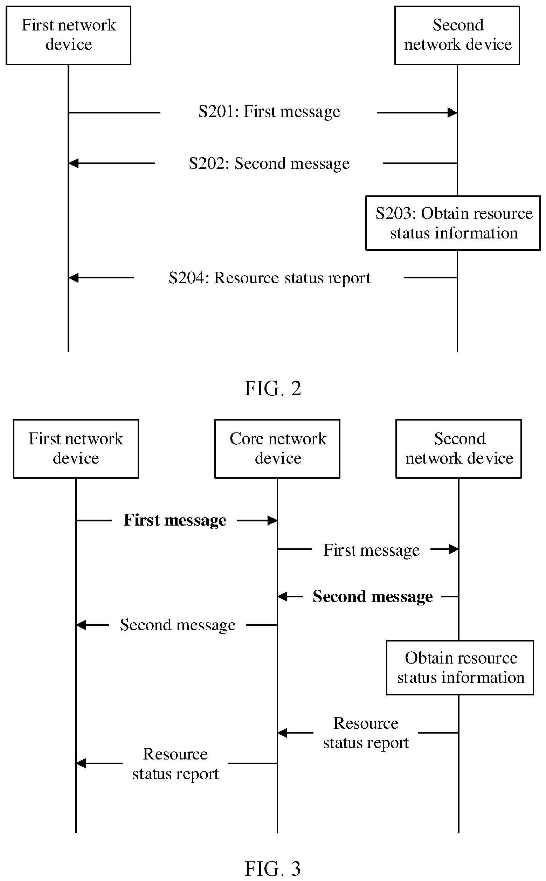

As shown in FIG. 2, an embodiment of this application provides a communication method. The communication method is used to implement mobility load balancing. Therefore, the communication method may also be referred to as a mobility load balancing method. The method may include the following steps.

S201: A first network device sends a first message to a second network device, to request to obtain a resource status report of the second network device.

For example, to implement load balancing or for another reason, the first network device may generate and send the first message to the second network device if the first network device wants to learn of resource usage of the second network device (in other words, requests to obtain the resource status report of the second network device). For ease of description, in this embodiment of this application, obtaining the resource status report may be referred to as load measurement.

The first message may be, for example, a resource status request (resource status request) message.

It may be understood that, when requesting to obtain the resource status report, the first network device may want to learn of different resource status report granularities. In other words, requested measured objects may be at different granularities. In this case, the load measurement may be more accurate. The requested measured object may include at least one of the following granularities: a base station (node) granularity, a cell granularity, a beam granularity, a slice granularity, or a bandwidth part (bandwidth part, BWP) granularity. Abeam may be understood as a spatial resource, and may refer to a transmit or receive precoding vector with energy transmission directivity. In addition, the transmit or receive precoding vector can be identified by using index information, and the index information may be a correspondingly configured resource identifier (identifier, ID) of a terminal. For example, the index information may be a correspondingly configured identifier or resource of a CSI-RS, may be a correspondingly configured identifier or resource of an SSB, or may be a correspondingly configured identifier or resource of an uplink sounding reference signal (Sounding Reference Signal, SRS). Optionally, the index information may alternatively be index information explicitly or implicitly carried by a signal or a channel that is carried by the beam. The energy transmission directivity may mean that the precoding vector is used to perform precoding processing on a signal that needs to be sent, so that the signal obtained through the precoding processing has specific spatial directivity; a received signal obtained through the precoding processing performed by using the precoding vector has good received power, for example, meets a received demodulation signal-to-noise ratio. The energy transmission directivity may also mean that same signals that are sent from different spatial positions and received by using the precoding vector have different received power.

In some possible implementations, the first message may include measured object information, and content of the measured object information may vary based on a granularity of a requested measured object. For example, for a measured object at the base station granularity, corresponding measured object information may be null, and a measured object is all cells in the base station by default. For a measured object at the cell granularity, corresponding measured object information may be at least one cell identifier (cell list). For a measured object at the beam granularity, corresponding measured object information is at least one cell identifier and at least one piece of beam identifier information in a cell corresponding to the at least one cell identifier. For a measured object at the slice granularity, corresponding measured object information is at least one cell identifier and at least one piece of slice identifier information in a cell corresponding to the at least one cell identifier. For example, the first network device wants to learn of resource usage of a cell 1, a cell 2, and a beam 2 of a cell 3 of the second network device. In this case, the measured object information may include an identifier of the cell 1 (cell ID 1), an identifier of the cell 2 (cell ID 2), and an identifier of the cell 3 plus an identifier of the beam 2 of the cell 3 (for example, a cell ID 3 + an SSB index 2). It should be noted that the foregoing granularities are used as examples, and there may alternatively be another different granularity. This is not limited in this embodiment of this application. A corresponding granularity may be indicated by using a corresponding identifier. For example, an identifier corresponding to the cell granularity is an identifier of a cell. An identifier corresponding to the beam granularity is an identifier of a cell and an index of a beam. An identifier corresponding to the slice granularity is an identifier of a cell and an identifier of a slice. An identifier corresponding to the BWP granularity is an identifier of a cell and an identifier of a BWP. It may be understood that the second network device may perform corresponding measurement based on the measured object information configured by the first network device, and the first network device configures measured objects at different granularities, so that load measurement can be more accurate and flexible.

Optionally, the first message may further include category information of the requested resource status report. In other words, the first message may indicate usage information of specific types of resources that the first network device wants to obtain. For example, the types of resources may include but are not limited to at least one of an air interface resource, a transport network layer (transport network layer, TNL) resource, a hardware resource, information about a quantity of RRC connections, a quantity of activated terminal devices, total available resources, or available slice capacity. Further, the resources may be distinguished in terms of an uplink direction and a downlink direction. In this case, the first network device may request a resource status report in the uplink direction and/or a resource status report in the downlink direction. In still another possible implementation, when the first network device requests the resource status report, the uplink direction and the downlink direction may alternatively be not distinguished, and the second network device may choose to send the resource status report in the uplink direction and/or the resource status report in the downlink direction to the first network device. Optionally, the uplink direction in this embodiment of this application may include supplementary uplink (supplementary uplink, SUL).

It may be understood that the second network device may perform corresponding measurement based on the category information configured by the first network device, and the first network device configures a category of the requested resource status report, so that the network device can obtain more abundant information about the resource status report. Optionally, the first network device may not configure the category information, but report usage information of at least one category of resources by default. Alternatively, the second network device determines to report usage information of at least one category of resources.

A specific form of the air interface resource may be, for example, a physical resource block (physical resource block, PRB) or a radio resource status (radio resource status), and may be indicated by using usage percentages of uplink and downlink guaranteed bit rate (guaranteed bit rate, GBR) PRBs and non-guaranteed bit rate (non-GBR) PRBs. The TNL resource may be indicated, for example, by using a provided TNL percentage or an available TNL percentage. The hardware resource may be indicated by using available hardware capacity. The quantity of RRC connections may be indicated by using a quantity of RRC connections or an available RRC connection percentage. The quantity of activated UEs may be a quantity of currently activated UEs. The total available resources may be indicated by using available capacity (composite available capacity, CAC), and the available capacity may be indicated by using a capacity level or an available capacity percentage. The available capacity percentage may include a percentage of available cell total capacity and/or a percentage of available capacity of each beam. The available slice capacity indicates available capacity of each slice. The quantity of activated terminal devices may be a quantity of activated terminal devices in each cell. The information about the quantity of RRC connections may be the quantity of RRC connections and/or the percentage of available RRC connections. In a possible implementation, usage information of specific types of resources may be indicated in a form of a dot matrix or a bitmap (bitmap). For example, the dot matrix or the bitmap includes at least one bit, and each bit indicates one type of resource. If the bit is "1", it indicates that usage information of a resource corresponding to the bit is requested. If the bit is "0", it indicates that usage information of a resource corresponding to the bit is not requested. A manner of setting a value of the bit is not limited in this embodiment of this application. The foregoing granularity is applicable to all or some types of resources herein. It may be understood that the first network device may request, for different measured objects, resource status reports corresponding to different types of resources.

Optionally, the first message may also include reporting period (which may also be referred to as a reporting period) information, and the reporting period information indicates a reporting period of the resource status report. For example, the reporting period may be set to 500 milliseconds or another value. This is not limited in this embodiment of this application. If the first message does not include the information indicating the reporting period, the second network device may report the resource status report for only one time, or determine, based on other information (for example, event information described below), when to send the resource status report for at least one time. It may be understood that the reporting period information may indicate one or more reporting periods. When one reporting period is configured, a period in which the second network device reports the resource status report does not change dynamically. When a plurality of reporting periods are configured, a period in which the second network device reports the resource status report may change dynamically. For example, the plurality of reporting periods may correspond to different resource usage (load) of the second network device, so that different reporting periods may be applied under different load. In this way, application of the reporting period is more reasonable and flexible. For example, it is assumed that the first message includes information about two reporting periods: a period 1 (used when the available resources are less than 50%) and a period 2 (used when the available resources are greater than or equal to 50%), where a length of the period 1 is less than a length of the period 2. In this case, the second network device may report the resource status report based on the period 1 when the available resources are less than 50%, and may report the resource status report based on the period 2 when the available resources are greater than or equal to 50%. It should be noted that the period 1 may also be applicable to a case in which the available resources are equal to 50%, that is, a case of a critical value is not limited. The reporting period may be applicable to the foregoing types and/or granularities of resources. For example, all types and/or granularities of resources may share one reporting period. Alternatively, different reporting periods may be configured, and each reporting period corresponds to one or more types and/or granularities of resources.

In some possible implementations, the first message may further include a measurement identifier to identify this measurement.

It may be understood that, the foregoing measured object information, the reporting period information, the category information, and the measurement identifier are optional information. In addition, the first message may also include at least one of measurement period information, event information triggering the resource status report, and overload threshold information.

The measurement period information indicates a period in which the second network device measures the resource usage, and may also be understood as indicating how often the second network device obtains the resource status report or how often the second network device performs load measurement. Similar to the reporting period information, the measurement period information may also indicate one or more measurement periods. It may be understood that a length relationship between the measurement period and the reporting period is not limited in this embodiment of this application. In a possible implementation, a length of the measurement period may be less than a length of the reporting period. In addition, when no measurement period is configured or the measurement period is 0, the second network device may perform measurement for only one time, or perform measurement in a default period or in another manner. This is not limited in this embodiment of this application.

Optionally, similar to the reporting period, the measurement period may correspond to different resource usage (load) of the second network device, so that different measurement periods may be applied under different load. For example, it is assumed that the first message includes information about two measurement periods: a period 3 (used when the available resources are less than 50%) and a period 4 (used when the available resources are greater than or equal to 50%), where a length of the period 3 is less than a length of the period 4. In this case, the second network device may perform measurement based on the period 3 when the available resources are less than 50%, and may perform measurement based on the period 4 when the available resources are greater than or equal to 50%.

Optionally, time validity of the measurement period may be controlled by using valid time or a quantity of valid times. For example, the measurement period expires after the valid time expires, or the measurement period expires after the second network device periodically performs measurement for a quantity of valid times. After the measurement period expires, the second network device stops periodic measurement. It may be understood that the second network device may start a timer or a counter after receiving the first message or after starting first periodic measurement, to control the time validity of the measurement period. The valid time or the quantity of valid times may be configured by using the first network device. For example, information about the valid time or the quantity of valid times is carried in the first message or another message to be sent to the second network device by the first network device. Alternatively, the valid time or the quantity of valid times is a preset or default value. A manner of setting the valid time or the quantity of valid times is not limited in this embodiment of this application.

It may be understood that the second network device may implement periodic measurement based on the measurement period. By configuring the measurement period, effectiveness of performing load (resource usage) measurement by the second network device can be improved. It may be understood that the measurement period may be applicable to the foregoing types and/or granularities of resources. For example, all the types and/or granularities of resources may share one measurement period. Alternatively, different measurement periods may be configured, and each measurement period corresponds to one or more types and/or granularities of resources.

After the measurement period is configured by using the first message, the second network device performs periodic measurement. Optionally, when periodic measurement needs to be stopped subsequently, the first network device may perform configuration, so that the second network device stops periodic measurement. In this way, measurement behavior of the second network device can be flexibly controlled. In other words, the first network device may send, to the second network device, information indicating to stop periodic measurement. For example, the first network device indicates the second network device to stop periodic measurement by using a dedicated message (namely, a message specially used to stop periodic measurement), where the dedicated message may be, for example, a stop message. For another example, the first network device may send, to the second network device, information indicating that the measurement period is 0, to indicate to stop periodic measurement. Different from that the measurement period is 0 indicated in the first message in the foregoing description, measurement is implemented for one time in the first message by indicating that the measurement period is 0. However, that the measurement period is indicated as 0 is subsequent control after periodic measurement is performed based on the first message. It may be understood that the information indicating that the measurement period is 0 may be carried in a message different from the first message (having different content or different sending time). Optionally, to avoid a case in which the second network device does not know measurement for which periodic measurement is to be stopped, the first network device may further indicate a measurement ID when indicating to stop periodic measurement, so that the second network device can accurately stop corresponding mobility load balancing measurement. It may be understood that a periodic measurement stopping method herein may be coupled with another step in this embodiment of this application (for example, after S202, S203, or S204, the first network device indicates the second network device to stop periodic measurement), or may be implemented independently of this embodiment of this application (that is, how to stop periodic measurement does not depend on a specific process in which the first network device obtains the resource status report of the second network device).

The event information triggering the resource status report is used to configure the second network device to report the resource status report when one or more events are met. The event information triggering the resource status report includes but is not limited to at least one of used resource threshold information, available resource threshold information, threshold information of resource occupation changing within preset time, and resource level baseline information.

The used resource threshold information may be an absolute threshold or relative threshold information. For example, the absolute threshold may be a percentage. In this case, when a percentage of used resources of the second network device is greater than or equal to a configured threshold, the second network device is triggered to report the resource status report. The relative threshold information may be an excess value threshold of used resources of the second network device relative to used resources of the first network device, for example, may be 10%. In addition, the relative threshold information may also be a relative relationship between the used resources of the second network device and the used resources of the first network device. For example, the used resources of the second network device exceed the used resources of the first network device.

Similar to the used resource threshold information, the available resource threshold information may also be absolute threshold information or relative threshold information. For example, the absolute threshold information may be a percentage. In this case, when a percentage of available resources of the second network device is less than or equal to the configured threshold, the second network device is triggered to report the resource status report.

The threshold information of resource occupation changing within preset time may be a threshold of amplitude of used resources changing within the preset time, and is used to determine whether a change of resources used by the second network device within a period of time exceeds preset amplitude. The preset time may be a specific time period (for example, from 10:00 to 11 :00), may be period information (which may be referred to as a change period), or may be information about duration after the first message is received. In this case, the second network device determines a change status of the used resources at intervals of a preset period, in a configured time period, or in a period of time, to determine whether to trigger reporting of the resource status report. For example, it is assumed that the configured threshold information of resource occupation changing within the preset time is that change amplitude of resource usage within five minutes (min) is greater than 30%. The second network device may determine, after receiving the first message, whether a change value of the resource usage within the five minutes is greater than 30%. If the change value of the resource usage within the five minutes is greater than or equal to 30%, the second network device is triggered to report the resource status report.

The first network device may configure resource level information for the second network device, that is, a quantity of measurement reporting levels (number of measurement reporting levels). For example, the quantity of levels may be configured to be any one of 2, 3, 4, 5, or 10. The quantity of levels is not limited in this embodiment of this application. It may be understood that the quantity of levels may not be configured by using the first network device, for example, may be a default quantity of levels. The resource level information is used to determine levels that resource usage below an overload threshold (optionally, the overload threshold may be included) is divided. It is assumed that the quantity of levels is 4, and the overload threshold is 80% of the used resources. The resource usage is divided into four levels. A level 1 indicates that a proportion of the used resources (resource usage) is 20%, a level 2 indicates that a proportion of the used resources is 40%, a level 3 indicates that a proportion of the used resources is 60%, and a level 4 indicates that a proportion of the used resources is 80%. In a case in which a change of the used resources of the second network device crosses at least one level (for example, from the level 2 to the level 3, or from the level 4 to the level 2), reporting of the resource status report is triggered However, when load is low, it is not necessary to report the resource status report. For example, no matter whether the resource usage is 20% or 30%, the resource usage may be understood as an idle state, and a neighboring network device (or may be referred to as a neighboring station) may not concern. In this case, to reduce unnecessary reporting, that is, reduce a quantity of times of signaling interaction and overheads, the first network device may configure the resource level baseline information for the second network device, where the resource level baseline information is a baseline for starting resource leveling. In other words, when the resources used by the second network device are greater than or equal to the baseline, the second network device starts to perform leveling based on the resource usage. For example, it is assumed that the resource level baseline is 60%. It is still assumed that the overload threshold is 80% of the proportion of the used resources, and the quantity of levels is 4. The second network device may enable resource leveling when the resource usage reaches 60%, and leveling is performed based on the baseline. To be specific, 65% of the resource usage is a level 1, 70% of the resource usage is a level 2, 75% of the resource usage is a level 3, and 80% of the resource usage is a level 4. In other words, when the resource level baseline is configured, and when the resource usage of the second network device is higher than the resource level baseline, a change of the resource usage crosses at least one level, and reporting of the resource status report is triggered. It may be understood that the foregoing quantity of levels and the resource level baseline may be used together to trigger reporting of the resource status report. It may be understood that the resource level baseline may be a preset value, or may be a value determined by the second network device (for example, may be determined based on a network status or a load status); and may not be sent by the first network device to the second network device.

The foregoing event information triggering the resource status report may be applicable to the foregoing types of resources. For example, all the types of resources may share a same piece of event information, or each piece of event information may correspond to one or more types of resources.

It may be understood that the second network device reports, based on the event information that is configured by the first network device and that is of triggering the resource status report, the resource status report when an event is met, so that reporting of the resource status report of the second network device can be more reasonable, and effectiveness of reporting is improved.

Optionally, the first network device may also send the overload threshold information to the second network device. The overload threshold information indicates a threshold used to determine whether the second network device is overloaded, so that the second network device can determine when to be overloaded and report overload information. In this way, a reporting operation of the second network device is more effective, and reported information is rich. As described above, the overload threshold may be a preset threshold of the proportion of the used resources. When the resources used by the second network device are greater than or equal to the overload threshold, it is determined that the second network device is overloaded (it is considered that the second network device enters an overload state). In addition, the overload threshold may also be a preset threshold of the proportion of the available resources. In this case, when the available resources of the second network device are less than or equal to the overload threshold, it is determined that the second network device is overloaded. When the second network device enters the overload state (for example, switches from a previous non-overloaded state to an overloaded state), reporting of the resource status report may be triggered, or when the second network device exits the overload state (for example, switches from the previous overloaded state to the non-overload state), reporting of the resource status report may also be triggered.

The overload threshold information may be applicable to the foregoing types and/or granularities of resources. All the types and/or granularities of resources may share one overload threshold. Alternatively, different overload thresholds may be configured, and each overload threshold corresponds to one or more types and/or granularities of resources.

It may be understood that when a plurality of pieces of information in the first message, for example, the measurement period information, the event information triggering the resource status report, the overload threshold information, and the reporting period information, are configured for the second network device, the plurality of pieces of information in the first message may jointly affect measurement and reporting of a resource status of the second network device. For example, the second network device performs measurement based on the measurement period, and reports the resource status when the event information is met. Examples are not listed one by one herein. In addition, in the foregoing embodiment, an example in which the pieces of information are carried in the first message is used. In some possible implementations, the foregoing pieces of information may be transmitted by using different messages. This is not limited in this embodiment of this application.

S202: The second network device sends, to the first network device, a second message that responds to the first message.

After receiving the first message, the second network device determines, based on a configuration of the first message, whether corresponding measurement can be performed. If finding that one or more resources cannot be measured, the second network device uses the second message to indicate that the resource status fails to be obtained, that is, indicate that measurement cannot be performed. For example, the second message may be a resource status failure (resource status failure) message. If the second network device can complete corresponding measurement based on the configuration of the first message, the second network device may use the second message to indicate that corresponding measurement (for example, measurement for the measured object indicated in the first message) can be initiated (initiated) or performed. The second message may be, for example, a resource status response (resource status response) message, and the resource status response message may indicate that measurement starts successfully. When the second network device can complete corresponding measurement based on the configuration of the first message, S203 and subsequent steps are performed.

S203: The second network device performs measurement based on the first message, to obtain resource status information.

After determining that corresponding measurement can be performed, the second network device performs corresponding measurement on the measured object in the first message based on the configuration in the first message (for details, refer to related description in S201), obtains the resource usage of the second network device, and obtains the resource status information, to further generate (obtain) the resource status report for reporting. It may be understood that, when the first message includes the measurement period information, the second network device performs periodic measurement. When the first message includes the overload threshold, the second network device indicates overload in the resource status report when generating the resource status report. In other words, the resource status report includes overload indication information (overload flag). It should be noted that even if the first message does not include the overload threshold, the second network device may indicate overload in the resource status report when generating the resource status report. The second network device may define or determine the overload threshold by itself.

S204: The second network device sends the resource status report.

After obtaining the resource status report, the second network device may immediately send (report) the resource status report to the first network device, or may determine, with reference to the reporting period and/or the event, when to send the resource status report to the first network device.

For example, the second network device may send the resource status report to the first network device each time the reporting period expires. In addition, the second network device may determine, based on the event information triggering the resource status report in the first message, an occasion for sending the resource status report. It may be understood that, both the reporting period and the event information may be configured to determine the occasion for sending the resource status report, or either of the reporting period and the event information is configured. In this case, the occasion for sending the resource status report by the second network device depends on the reporting period or the event information. For how the event information triggers the second network device to send the resource status report, refer to related description in S201. Details are not described herein again.

For example, it is assumed that the measurement period information included in the first message is 50 ms; the reporting period information is 200 ms; the event information triggering the resource status report is 70% of the threshold of the used resources; the measured object information is the identifier of the cell 1, and the identifier and a beam identifier 3 of the cell 2; and the category information of the resource status report is the total available resources. It indicates that the first network device requests, from the second network device, information about total available resources of the cell 1 and information about total available resources of the beam 3 of the cell 2; the measurement period is 50 ms; the reporting period is 200 ms; and a configured event is that the total available resources are less than or equal to 20%. In this way, the second network device measures the total available resources of the cell 1 and the total available resources of the beam 3 of the cell 2 at a period of 50 ms, to generate the resource status report, and the second network device reports a recently generated resource status report every 200 ms. In addition, the second network device may further send the resource status report to the first network device when the total available resources of the cell 1 are less than or equal to 20% and/or the total available resources of the beam 3 of the cell 2 are less than or equal to 70%. It may be understood that the resource status report indicates the information about the overall available resources of the cell 1 and the overall available resources of the beam 3 of the cell 2. The foregoing uses the overall available resources as an example for description. An implementation of another type of resource is similar, and examples are not listed one by one. It should be noted that if there is more than one type of resource status report configured in the first message, various types of resource information are indicated in resource status reports one by one. For example, different types of resources are indicated by using different information elements.

Optionally, when the second network device determines that the resources are overloaded, the second network device may send, to the first network device, information indicating overload, to indicate to the first network device that the overload occurs. It may be understood that the second network device may determine, based on the overload threshold information indicated by the first network device, that the resources of the second network device are overloaded. When the first network device does not indicate the overload threshold information, the second network device may determine the overload threshold by itself. Further, when indicating, to the first network device, that the overload occurs, the second network device may also send, to the first network device, information indicating the overload threshold, so that the first network device clearly learns a load status of the second network device.

In some possible implementations, the overload threshold and the information indicating the overload may also be carried in the resource status report.

For example, the resource status report may be carried in a resource status update message.

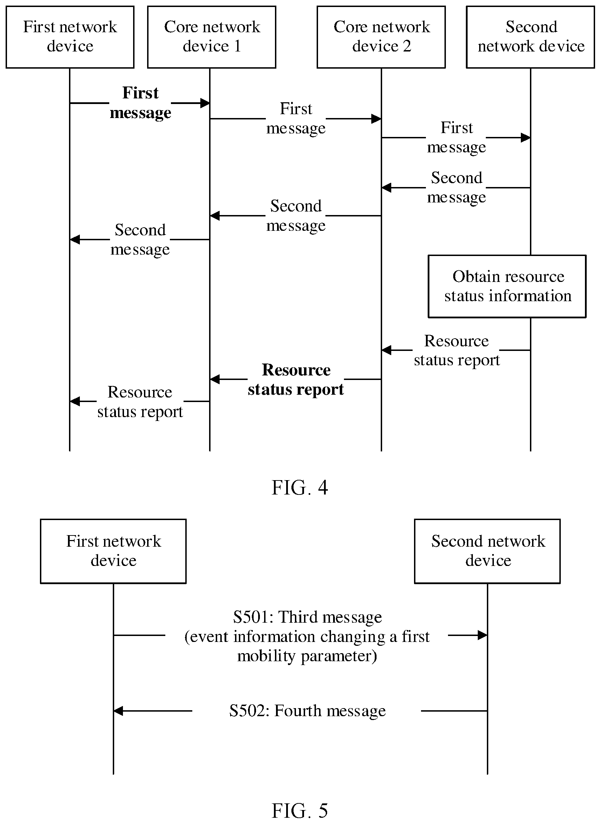

It may be understood that if an interface (for example, an Xn/X2/F 1/E1 interface) exists between the first network device and the second network device, the first message, the second message, and the resource status report may be transmitted through the interface. If there is no interface between the first network device and the second network device, transmission of the first message, the second message, and the resource status report between the first network device and the second network device may be implemented in the following manners. (1) As shown in FIG. 3, the first network device sends the first message to a core network device through an interface (for example, an NG interface or an S 1 interface) between the first network device and the core network device, and the core network device sends the first message to the second network device, so that the second network device learns that the first network device requests to obtain the resource status report of the second network device. Correspondingly, the second message and the resource status report may be transferred from the second network device to the first network device through an interface between the second network device and the core network device. (2) As shown in FIG. 4, the first network device sends the first message to a core network device 1, the core network device 1 sends the first message to a core network device 2, and the core network device 2 sends the first message to the second network device. Correspondingly, the second network device sends the second message and the resource status report to the core network device 2, the core network device 2 sends the received second message and the received resource status report to the core network device 1, and the core network device 1 sends the second message and the resource status report to the first network device.

The first message, the second message, and a message that carries the resource status report may be RRC messages, NAS messages, or containers (containers). Message types vary based on different interfaces.

According to the method in this embodiment of this application, statistics collection, measurement, and exchange are performed on the used resources, so that network elements learn load of each other more accurately, so that a mobility parameter may be further adjusted. In this way, a load balancing function between the network elements can be improved and enhanced, and an exchange process is simple, direct, and effective. In particular, this is more effective for a load exchange process between systems. Further, mobility information exchanged between network devices may be richer.

As shown in FIG. 5, an embodiment of this application further provides a communication method, which may also be referred to as a mobility load balancing method. The method includes the following steps.

S501: A first network device sends a third message to a second network device, to request to change a mobility parameter.

In a mobility parameter change process, the first network device may send the third message to the second network device, to request to change the mobility parameter. The third message may be, for example, a mobility change request message. A process in which the first network device sends the third message to the second network device may also be understood as receiving, by the second network device, a mobility parameter change request of the first network device.

The third message includes an identifier of a first cell, an identifier of a second cell, and event information of a first mobility parameter change. The mobility parameter includes a mobility parameter of the first network device and/or a mobility parameter of the second network device. The first cell belongs to the first network device, and the second cell belongs to the second network device.

Optionally, the third message may further include a cause value, indicating a reason why the first network device initiates a mobility change request. The cause value herein may be, for example, load reduction. This is not limited in this embodiment of this application.

It may be understood that the mobility parameter change requested by the first network device may have different granularities, for example, include at least one of the following granularities: a cell granularity, a beam granularity, a slice granularity, or a bandwidth part (bandwidth part, BWP) granularity.

The third message carries the first identifier, where the first identifier corresponds to requested mobility parameter change objects of different granularities. For example, when the mobility parameter change requested by the first network device is at the cell granularity, the first identifier may include an identifier of at least one cell that belongs to the first network device (an identifier of the first cell) and an identifier of at least one cell that belongs to the second network device (an identifier of the second cell). When the mobility parameter change requested by the first network device is at the beam granularity, the first identifier may include an identifier of the first cell and an index (or an identifier) of at least one beam of the first cell, and an identifier of the second cell and an index of at least one beam of the second cell.

The event information of the first mobility parameter change may also be understood as a mobility parameter change rule. An example in which the mobility parameter is a handover threshold is used. The event information of the first mobility parameter change is associated with resource usage and a handover threshold of the first network device and/or the second network device. The resource usage and the handover threshold of the first network device and/or the second network device correspond to a granularity of the mobility parameter change. In other words, the resource usage and the handover threshold of the first network device and/or the second network device are resource usage and a handover threshold corresponding to the foregoing identifier. For example, when the granularity of the requested mobility parameter change is the cell granularity, the resource usage of the first network device may be resource usage of the first cell, and the resource usage of the second network device may be resource usage of the second cell. In this case, the handover threshold may be a handover threshold corresponding to the first cell and/or the second cell.

An example in which the granularity of the requested mobility parameter change is the cell granularity is used, and the event information of the mobility parameter change includes but is not limited to at least one of the following:
each time used resources of the second cell increase by a first preset value, the handover threshold corresponding to the second cell decreases by a second preset value, and/or the handover threshold corresponding to the first cell increases by a third preset value;
each time available resources of the first cell increase by a fourth preset value, the handover threshold corresponding to the second cell decreases by a fifth preset value, and/or the handover threshold corresponding to the first cell increases by a sixth preset value; and
when the available resources of the first cell are greater than or equal to a seventh preset value, the handover threshold corresponding to the second cell is not greater than an eighth preset value, and/or the handover threshold corresponding to the first cell is not less than a ninth preset value.

It should be noted that a handover threshold corresponding to a cell is a threshold that triggers a network device to determine to hand over a terminal from a serving cell to another neighboring cell. The foregoing uses the cell granularity as an example for description. A scenario of another granularity is similar, and is not described one by one in this embodiment of this application. In addition, a specific mobility parameter change rule is not limited in this embodiment of this application. Based on the example in this embodiment of this application, any modification may be performed. For example, each time available resources of the second cell increase by a tenth preset value, the handover threshold corresponding to the second cell increases by an eleventh preset value, and/or the handover threshold corresponding to the first cell decreases by a twelfth preset value. Alternatively, when available resources of the second cell are more than the available resources of the first cell, the handover threshold corresponding to the second cell is not lower than a thirteenth preset value, and/or the handover threshold corresponding to the first cell is not higher than a fourteenth preset value. Values of the first to the fourteenth preset values are not limited in this embodiment of this application.

In addition, the foregoing uses the mobility parameter as the handover threshold as an example, or the handover threshold may be another mobility parameter. It may be understood that a rule for changing the another mobility parameter is similar to that for changing the handover threshold.

S502: The second network device sends, to the first network device, a fourth message that responds to the third message.

If the second network device does not accept (rejects) the mobility parameter change request of the first network device, for example, the second network device does not agree with the event information of the first mobility parameter change, the second network device indicates, to the first network device in the fourth message, that the second network device rejects to change the mobility parameter, where the fourth message may be, for example, a mobility change rejection message. Optionally, when the second network device does not agree with the event information of the first mobility parameter change, the fourth message may further include event information of a mobility parameter change (event information of a second mobility parameter change) that is acceptable to or proposed by the second network device, so that negotiation between the first network device and the second network device can be better completed, and efficiency is improved. The event information of the second mobility parameter change may be all or partially different from the event information of the first mobility parameter change, for example, may be new event information of a mobility parameter change that is adjusted based on the event information of the first mobility parameter change, or may be new event information of a mobility parameter change that is of a different type from the event information of the first mobility parameter change. The event information of the second mobility parameter change is not limited in this embodiment of this application. In addition, the fourth message may further include a second identifier, and the second identifier corresponds to an object corresponding to the event information of the second mobility parameter change. For example, the event information of the second mobility parameter change corresponds to the first cell and the second cell. The fourth message may include the identifier of the first cell and the identifier of the second cell.

If the second network device accepts the mobility parameter change request of the first network device, the second network device may indicate, to the first network device by using the fourth message, that the second network device accepts the mobility parameter change request of the first network device, for example, accepts the event information of the first mobility parameter change, where the fourth message may be, for example, a mobility change response message. Optionally, the fourth message may include a third identifier, and the third identifier and the first identifier may be a same identifier.

It may be understood that if an interface (for example, an Xn/X2/F 1/E1 interface) exists between the first network device and the second network device, the third message and the fourth message may be transmitted through the interface. If there is no interface between the first network device and the second network device, the transmission of the third message and the fourth message between the first network device and the second network device may be implemented by referring to the manner in FIG. 3 or FIG. 4.

The third message and the fourth message may be RRC messages, NAS messages, or containers. Message types vary based on different interfaces.

It can be learned that in this embodiment of this application, the event-based mobility parameter change is introduced, and the mobility parameter change is associated with the resource usage and mobility parameters of the first network device and/or the second network device, so that a mobility parameter change between network devices is more intelligent. Further, compared with a one-time adjustment solution for the mobility parameter, signaling can also be reduced by using the solution in this embodiment of this application. In addition, in the solution of this embodiment of this application, not only the mobility parameter at the cell granularity may change, but also a mobility parameter at another granularity may change, so that the mobility parameter change is more flexible and refined.

The communication method in the embodiment shown in FIG. 2 and the communication method in the embodiment shown in FIG. 5 may be implemented independently, or may be combined. For example, the mobility parameter may be adjusted according to the embodiment shown in FIG. 5 and the resource status report may be obtained according to the embodiment shown in FIG. 2. Alternatively, a process of the embodiment shown in FIG. 5 may be triggered after the first network device obtains the resource status report according to the embodiment shown in FIG. 2. This is not limited in embodiments of this application. The first network device in the embodiment shown in FIG. 5 and the first network device in the embodiment shown in FIG. 2 may be a same network device or different network devices. In addition, the second network device in the embodiment shown in FIG. 5 and the second network device in the embodiment shown in FIG. 2 may be a same network device or different network devices.

It should be noted that the first network device and the second network device in the foregoing embodiments of this application may be of a same standard (RAT) or different standards, or the first network device and the second network device may belong to a same system or different systems.

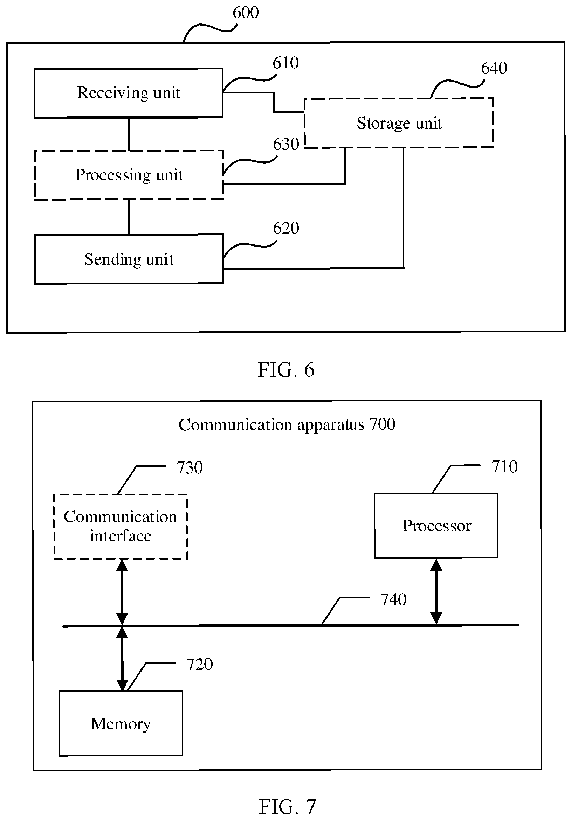

FIG. 6 is a schematic block diagram of a communication apparatus 600 according to an embodiment of this application. The communication apparatus 600 may correspondingly implement functions or steps implemented by the network device (the first network device or the second network device) in the foregoing method embodiments. The communication apparatus 600 may be a network device, a component (for example, a chip or a circuit) that may be applicable to the network device, or the communication apparatus 600 may be a chip system. In this embodiment of this application, the chip system may include a chip, or may include a chip and another discrete component.

In some possible implementations, the communication apparatus may include a receiving unit 610 and a sending unit 620. Optionally, the communication apparatus may further include a processing unit 630. The processing unit 630 may be coupled to the receiving unit 610 and/or the sending unit 620. For example, the processing unit 630 controls the receiving unit 610 and/or the sending unit 620 to implement corresponding processing, or performs corresponding processing based on information obtained from the receiving unit 610 and/or the sending unit 620.

For example, when the communication apparatus correspondingly implements a function or a step of the first network device,
the sending unit 620 may be configured to send a first message to the second network device, to request to obtain a resource status report of the second network device, and the receiving unit 610 may be configured to receive, from the second network device, a second message that responds to the first message. Optionally, the processing unit 630 may be configured to generate the first message. Optionally, the receiving unit 610 may be further configured to receive one or more of the resource status report and overload threshold information from the second network device. Optionally, the sending unit 620 may further indicate the second network device to stop periodic measurement. For coupling between units, specific implementation, and message content, refer to description in the embodiment shown in FIG. 2. Details are not described herein again.

Alternatively, the sending unit 620 may be configured to send a third message to the second network device, and the receiving unit 610 may be configured to receive, from the second network device, a fourth message that responds to the third message. Optionally, the processing unit may be configured to generate the third message. For coupling between units, specific implementation, and message content, refer to description in the embodiment shown in FIG. 5. Details are not described herein again.

When the communication apparatus correspondingly implements a function or a step of the second network device,
the receiving unit 610 may be configured to receive a first message from the first network device, and the sending unit 620 may be configured to send, to the first network device, a second message that responds to the first message. Optionally, the processing unit 630 is configured to generate the second message. Optionally, the processing unit 630 may be further configured to determine, based on the first message, whether measurement corresponding to the first message can be completed. Optionally, the processing unit 630 may be further configured to: perform measurement, and obtain a resource status report based on the first message. Optionally, the sending unit 620 may be further configured to send the resource status report to the first network device. Optionally, the receiving unit 610 may be further configured to receive, from the first network device, information indicating to stop periodic measurement, and the processing unit 630 may be configured to stop periodic measurement based on the indication information. Optionally, the sending unit 620 may be further configured to send overload threshold information to the first network device. For coupling between units, specific implementation, and message content, refer to description in the embodiment shown in FIG. 2. Details are not described herein again.

Alternatively, the receiving unit 610 may be configured to receive a third message from the first network device, and the sending unit 620 may be configured to send, to the first network device, a fourth message that responds to the third message. Optionally, the processing unit may be configured to generate the fourth message. For coupling between units, specific implementation, and message content, refer to description in the embodiment shown in FIG. 5. Details are not described herein again.

It should be understood that the processing unit 630 in this embodiment of this application may be implemented by at least one processor or a circuit component related to a processor, and the receiving unit 610 and the sending unit 630 may be implemented by a transceiver or a circuit component related to a transceiver. In addition, the foregoing units may be separated or integrated. This is not limited in this embodiment of this application.

Optionally, the communication apparatus 600 may further include a storage unit 640. The storage unit 640 may be configured to store instructions or data. The processing unit 630 may execute or read the instructions or the data stored in the storage unit, to enable the communication apparatus to implement a corresponding operation. Optionally, the storage unit 640 may be implemented by using at least one memory.

An embodiment of this application further provides a communication apparatus 700, which may be configured to implement or support the communication apparatus 700 to implement a function or a step of a network device (the first network device or the second network device) in the method provided in embodiments of this application. The communication apparatus 700 includes at least one processor 710 and at least one memory 720 that is configured to store program instructions and/or data. The memory 720 is coupled to the processor 710. The coupling in embodiments of this application may be an indirect coupling or a communication connection between apparatuses, units, or modules in an electrical form, a mechanical form, or another form, and is used for information exchange between the apparatuses, the units, or the modules. The processor 710 may cooperate with the memory 720. The processor 710 may execute the program instructions and/or the data stored in the memory 720, so that the communication apparatus 700 implements a corresponding method. Optionally, at least one of the at least one memory may be included in the processor.

Optionally, the communication apparatus 700 may further include a communication interface 730, configured to communicate with another device by using a transmission medium, so that an apparatus in the communication apparatus 700 can communicate with the another device.

A specific connection medium between the communication interface 730, the processor 710, and the memory 720 is not limited in this embodiment of this application. For example, in this embodiment of this application, the memory 720, the processor 710, and the communication interface 730 are connected to each other through a bus 740 in FIG. 7. The bus is represented by using a thick line in FIG. 7. A connection manner between other components is merely an example for description, and is not limited thereto. The bus may be classified into an address bus, a data bus, a control bus, and the like. For ease of representation, only one bold line is used for representation in FIG. 7, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed in embodiments of this application may be directly performed by a hardware processor, or may be performed by using a combination of hardware and software modules in the processor.

In embodiments of this application, the memory may be a non-volatile memory, for example, a hard disk drive (hard disk drive, HDD) or a solid-state drive (solid-state drive, SSD), or may be a volatile memory (volatile memory) such as a random-access memory (random-access memory, RAM). The memory is any other medium that can carry or store expected program code in a form of instructions or a data structure and that can be accessed by a computer, but is not limited thereto. The memory in this embodiment of this application may alternatively be a circuit or any other apparatus that can implement a storage function, and is configured to store the program instructions and/or the data.

An embodiment of this application further provides a communication system, configured to implement all or some of the steps of the foregoing method embodiments. For example, the communication system may include at least one first access network device and at least one second access network device, and optionally, may further include a terminal device and/or a third access network device.

An embodiment of this application further provides a computer-readable storage medium, including instructions. When the instructions are run on a computer, the method performed by the first network device in FIG. 2 to FIG. 5 is performed.

An embodiment of this application further provides a computer-readable storage medium, including instructions. When the instructions are run on a computer, the method performed by the second network device in FIG. 2 to FIG. 5 is performed.

An embodiment of this application further provides a computer program product, including instructions. When the instructions are run on a computer, the method performed by the first network device or the second network device in FIG. 2 to FIG. 5 is performed.

It should be understood that the terms "system" and "network" may be used interchangeably in embodiments of this application. "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are not intended to limit an order, a time sequence, priorities, or importance of a plurality of objects. For example, a first message and a second message are merely intended to distinguish between different messages, but do not indicate that the two messages are different in priorities, a sending sequence, or importance.

It should be understood that, the processor mentioned in embodiments of this application may be a CPU or may be another general-purpose processor, a digital signal processor (digital signal processor, DSP), an application specific integrated circuit (application specific integrated circuit, ASIC), a field programmable gate array (field programmable gate array, FPGA) or another programmable logical device, a discrete gate or transistor logic device, a discrete hardware component, or the like. The general-purpose processor may be a microprocessor, or the processor may be any conventional processor or the like.

It may be further understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitation, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

All or some of foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive Solid State Drive (SSD)), or the like.

The foregoing description is merely a specific implementation of this application, but is not intended to limit the protection scope of embodiments of this application. Any variation or replacement readily figured out by a person skilled in and familiar with the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method comprises:
sending, by a first network device, a first message to a second network device to request to obtain a resource status report of the second network device, wherein the first message comprises measured object information, and the first message further comprises at least one of measurement period information, event information triggering the resource status report, and overload threshold information, wherein the event information triggering the resource status report comprises at least one of used resource threshold information, available resource threshold information, threshold information of resource occupation changing within preset time, and resource level baseline information, a resource level baseline is a baseline for starting resource leveling, the measurement period information indicates a period in which the second network device measures resource usage, and the overload threshold information indicates a threshold for determining whether the second network device is overloaded; and
receiving, by the first network device, a second message that responds to the first message from the second network device.

2. The method according to claim 1, wherein the second message indicates that a resource status fails to be obtained.

3. The method according to claim 1, wherein the second message indicates that a second access network device can initiate measurement on a measured object, and the method further comprises:
receiving, by the first network device, the resource status report from the second network device.

4. The method according to any one of claims 1 to 3, wherein the measurement period information comprises at least one measurement period.

5. The method according to claim 4, wherein the at least one measurement period corresponds to the resource usage.

6. The method according to any one of claims 1 to 5, wherein the resource comprises at least one of an air interface resource, a transport layer resource, total available resources, a hardware resource, available slice capacity, a quantity of activated terminal devices in a cell, and information about a quantity of radio resource control RRC connections in the cell.

7. The method according to any one of claims 1 to 6, wherein the resource status report indicates overload, and the method further comprises: receiving the overload threshold information from the second network device.

8. The method according to any one of claims 1 to 7, further comprising:
indicating, by the first network device, the second network device to stop periodic measurement.

9. The method according to claim 8, wherein the indicating, by the first network device, the second network device to stop periodic measurement comprises: sending, by the first network device to the second network device, information indicating that a measurement period is 0.

10. A communication method, comprising:
receiving, by a second network device, a first message from a first network device, wherein the first message is used to request to obtain a resource status report of the second network device, the first message comprises measured object information, and the first message further comprises at least one of measurement period information, event information triggering the resource status report, and overload threshold information, wherein the event information triggering the resource status report comprises at least one of used resource threshold information, available resource threshold information, threshold information of resource occupation changing within preset time, and resource level baseline information, a resource level baseline is a baseline for starting resource leveling, the measurement period information indicates a period in which the second network device measures resource usage, and the overload threshold information indicates a threshold for determining whether the second network device is overloaded; and
sending, by the second network device, a second message that responds to the first message to the first network device.

11. The method according to claim 10, wherein the second network device determines, based on the first message, that measurement corresponding to the first message cannot be completed, and the second message indicates that a resource status fails to be obtained.

12. The method according to claim 10, wherein the second network device determines, based on the first message, that measurement corresponding to the first message can be completed, and the second message indicates that measurement on a measured object can be initiated.

13. The method according to claim 12, wherein the method further comprises:
performing, by the second network device, measurement based on the first message, to obtain the resource status report; and
sending, by the second network device, the resource status report to the first network device.

14. The method according to any one of claims 10 to 13, wherein the measurement period information comprises at least one measurement period.

15. The method according to claim 14, wherein the at least one measurement period corresponds to the resource usage.

16. The method according to any one of claims 10 to 15, wherein the resource comprises at least one of an air interface resource, a transport layer resource, total available resources, a hardware resource, available slice capacity, a quantity of activated user equipments in a cell, and a quantity of radio resource control RRC connections in the cell.

17. The method according to any one of claims 10 to 16, wherein the resource status report indicates resource overload, and the method further comprises: sending, by the second network device, the overload threshold information to the first network device.

18. The method according to any one of claims 10 to 17, further comprising:
receiving, by the second network device from the first network device, information indicating to stop periodic measurement.

19. The method according to claim 18, wherein the information indicating to stop periodic measurement is information indicating that a measurement period is 0.

20. A communication method, wherein the method comprises:
sending, by a first network device, a third message to a second network device, to request to change a mobility parameter, wherein the third message comprises an identifier of a first cell of the first network device, an identifier of a second cell of the second network device, and event information of mobility parameter change, and the mobility parameter comprises a mobility parameter of the first network device and/or a mobility parameter of the second network device; and
receiving, by the first network device, a fourth message that responds to the third message from the second network device.

21. The method according to claim 20, wherein the fourth message indicates that the second network device rejects to change the mobility parameter.

22. The method according to claim 21, wherein the fourth message comprises event information that the second network device can accept to change the mobility parameter.

23. The method according to claim 20, wherein the fourth message indicates event information that the second network device accepts to change the mobility parameter.

24. The method according to any one of claims 20 to 23, wherein the event information of mobility parameter change is associated with resource usage of the first network device and/or the second network device.

25. The method according to any one of claims 20 to 24, wherein the mobility parameter comprises a handover threshold.

26. A communication method, comprising:
receiving, by a second network device, a third message from a first network device, wherein the third message is used to request to change a mobility parameter, the third message comprises an identifier of a first cell of the first network device, an identifier of a second cell of the second network device, and event information of mobility parameter change, and the mobility parameter comprises a mobility parameter of the first network device and/or a mobility parameter of the second network device; and
sending, by the second network device, a fourth message that responds to the third message to the first network device.

27. The method according to claim 26, wherein the fourth message indicates that the second network device rejects to change the mobility parameter.

28. The method according to claim 27, wherein the fourth message comprises event information that the second network device can accept to change the mobility parameter.

29. The method according to claim 26, wherein the fourth message indicates event information that the second network device accepts to change the mobility parameter.

30. The method according to any one of claims 26 to 29, wherein the event information of mobility parameter change is associated with resource usage of the first network device and/or the second network device.

31. The method according to any one of claims 26 to 30, wherein the mobility parameter comprises a handover threshold.

32. A communication apparatus, configured to implement the method according to any one of claims 1 to 9 or the method according to any one of claims 20 to 25.

33. A communication apparatus, configured to implement the method according to any one of claims 10 to 19 or the method according to any one of claims 26 to 31.

34. A communication system, wherein the communication system comprises the communication apparatus according to claim 32 and/or the communication apparatus according to claim 33.

35. A computer-readable storage medium, wherein the computer-readable storage medium stores a computer program, and when the computer program is executed, the method according to any one of claims 1 to 31 is performed.

36. A computer program product, wherein the computer program product comprises instructions, and when the instructions are executed, the method according to any one of claims 1 to 31 is implemented.
